# EUROPÄISCHE PATENTANMELDUNG

(11) **EP 3 431 767 A1**
(43) Veröffentlichungstag der Anmeldung: **23.01.2019**
(21) Anmeldenummer: 18192753.4
(22) Anmeldetag: 25.11.2016
(51) Int. Cl.: F04D 15/00, F01P 7/16, G05D 23/13, F04D 29/42

(54) **KÜHLMITTELPUMPE FÜR EINEN MOTORKÜHLKREIS**

(30) Priorität: 07.12.2015 DE 102015224448
(62) Teilanmeldung aus: 16801492.6
(71) Anmelder: Mahle International GmbH, 70376 Stuttgart (DE)
(72) Erfinder: FRITSCH, Karl-Martin, 65933 frankfurt (DE); KRAPPEL, Michael, 70378 Stuttgart (DE)
(74) Vertreter: BRP Renaud & Partner mbB Rechtsanwälte Patentanwälte Steuerberater

(57) **Zusammenfassung**

Die vorliegende Erfindung betrifft eine Kühlmittelpumpe (5) für einen Motorkühlkreis (1) eines Kraftfahrzeugs, mit einem Gehäuse (11), in dem ein Laufrad (20) drehbar angeordnet ist, das im Gehäuse (11) zwischen einem Saugraum (22) und einem Druckraum (23) angeordnet ist, mit einem am Gehäuse (11) ausgebildeten Motoranschluss (10), der mit dem Druckraum (23) fluidisch verbunden ist, und mit einem am Gehäuse (11) ausgebildeten Kühleranschluss (16), der mit dem Saugraum (22) fluidisch verbunden ist.

Eine besonders kompakte Bauform für den Motorkühlkreis (1) ergibt sich, wenn am Gehäuse (11) ein Bypassanschluss (18) ausgebildet ist, der mit dem Saugraum (22) fluidisch verbunden ist, und wenn im Gehäuse (11) im Saugraum (22) ein Thermostatventil (19) zum temperaturabhängigen Steuern des Bypassanschlusses (18) angeordnet ist.

## Beschreibung

Die vorliegende Erfindung betrifft eine Kühlmittelpumpe für einen Motorkühlkreis eines Kraftfahrzeugs, vorzugsweise eines Personenkraftwagens.

Eine Kühlmittelpumpe kommt in einem Motorkühlkreis eines Kraftfahrzeugs zur Anwendung, um im Motorkühlkreis ein flüssiges Kühlmittel anzutreiben. Da das Kühlmittel üblicherweise zu einem großen Anteil aus Wasser besteht, kann eine derartige Kühlmittelpumpe auch als Kühlwasserpumpe bezeichnet werden.

Üblicherweise besitzt eine Kühlmittelpumpe an ihrem Gehäuse einen Druckanschluss sowie einen Sauganschluss. Im Einbauzustand führt der Motorkühlkreis vom Druckanschluss der Kühlmittelpumpe zu einem Motorblock einer zu kühlenden Brennkraftmaschine. Vom Motorblock führt der Motorkühlkreis das Kühlmittel zu einem Kühler und vom Kühler an den Sauganschluss und somit zurück zur Kühlmittelpumpe. Damit bei einem Kaltstart der Brennkraftmaschine eine Betriebstemperatur für die Brennkraftmaschine möglichst rasch erreicht werden kann, enthält der Motorkühlkreis üblicherweise einen temperaturgesteuerten Kühlerbypass, der den Kühler umgeht. Somit kann das Kühlmittel nach dem Motorblock direkt zur Kühlmittelpumpe zurückgeleitet werden. Zur thermischen Steuerung des Kühlerbypasses ist üblicherweise ein Thermostatventil vorgesehen, das in Abhängigkeit der Temperatur des Kühlmittels den Kühlerbypass öffnet oder sperrt. Ein derartiges Thermostatventil ist dabei üblicherweise eine bezüglich der Kühlmittelpumpe separate Baugruppe, die stromauf der Kühlmittelpumpe in den Motorkühlkreis eingebaut ist. Hierdurch wird für die Realisierung des Motorkühlkreises vergleichsweise viel Bauraum benötigt.

Moderne Kraftfahrzeuge, insbesondere Personenkraftwagen, bauen häufig sehr kompakt, so dass insbesondere im Motorraum regelmäßig nur sehr wenig Bauraum zur Verfügung steht.

Die vorliegende Erfindung beschäftigt sich mit dem Problem, für einen derartigen Motorkühlkreis bzw. für eine derartige Kühlmittelpumpe eine verbesserte Ausführungsform anzugeben, die sich insbesondere durch einen reduzierten Bauraumbedarf auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Gehäuse der Kühlmittelpumpe mit drei Anschlüssen zu versehen, nämlich mit einem Motoranschluss, mit einem Kühleranschluss und mit einem Bypassanschluss. Außerdem wird vorgeschlagen, in das Gehäuse der Kühlmittelpumpe ein Thermostatventil zu integrieren, derart, dass es den Bypassanschluss steuert. Durch die Integration des Thermostatventils in die Kühlmittelpumpe benötigt der damit ausgestattete Motorkühlkreis signifikant weniger Bauraum. Ferner vereinfacht sich die Leitungsführung für den Motorkühlkreis.

Gemäß einer vorteilhaften Ausführungsform kann das Thermostatventil einen temperaturabhängig arbeitenden Steller und ein mit dem Steller zwischen einer Offenstellung zum Freigeben des Bypassanschlusses und einer Schließstellung zum Sperren des Bypassanschlusses verstellbares Ventilglied aufweisen. Das Ventilglied wirkt dabei innerhalb des Gehäuses unmittelbar mit dem Bypassanschluss zusammen. Insbesondere kann eine Sitzkontur unmittelbar am Gehäuse ausgeformt sein, mit der das Ventilglied in der Schließstellung zusammenwirkt. Hierdurch erhält das Thermostatventil einen besonders kompakten Aufbau, so dass die Unterbringung des Thermostatventils im Gehäuse vereinfacht ist.

Gemäß einer Weiterbildung kann das Ventilglied eine um eine Schwenkachse schwenkverstellbare Klappe sein. Hierdurch wird ein besonders einfacher Aufbau realisiert.

Gemäß einer Weiterbildung kann die Klappe einen mit dem Bypassanschluss zum Steuern zusammenwirkenden Klappenkörper und einen mit dem Steller gekoppelten Stellarm aufweisen. Ferner kann die Schwenkachse zwischen Klappenkörper und Stellarm durch die Klappe verlaufen. Hierdurch ergibt sich eine besonders einfache Struktur, die sich preiswert realisieren lässt. Insbesondere kann die Schwenkachse in der Nähe einer Wand des Gehäuses positioniert werden, so dass für die Offenstellung ein minimaler Strömungswiderstand realisierbar ist.

Vorteilhaft kann die Schwenkachse im Bereich eines Übergangs zwischen Bypassanschluss und Kühleranschluss angeordnet sein, wodurch sich eine besonders kompakte Bauform realisieren lässt. Gleichzeitig kann der Strömungwiderstand in der Offenstellung reduziert werden.

Zusätzlich oder alternativ kann vorgesehen sein, dass sich der Klappenkörper in den Bypassanschluss hineinerstreckt, während sich der Stellarm in den Kühleranschluss hineinerstreckt. Auch dies reduziert den erforderlichen Bauraum. Ein Besonders geringer Strömungswiderstand liegt vor, wenn der Klappenkörper in der Offenstellung innerhalb des Bypassanschlusses an einer Wandung anliegt.

Bei einer anderen vorteilhaften Weiterbildung kann der Steller als bidirektionaler linearer Steller ausgestaltet sein. Ein derartiger Steller arbeitet besonders zuverlässig.

Bei einer Weiterbildung kann der Steller koaxial zum Laufrad angeordnet sein. Hierdurch erzeugt der Steller innerhalb des Gehäuses, insbesondere innerhalb des Saugraums des Gehäuses, der sich stromauf eines Laufrads der Kühlmittelpumpe befindet, einen minimalen Strömungswiderstand, wodurch das in das Gehäuse integrierte Thermostatventil keinen oder nur einen minimalen Einfluss auf die Förderleistung der Kühlmittelpumpe hat.

Bei einer anderen vorteilhaften Weiterbildung kann der Steller koaxial zum Kühleranschluss angeordnet sein. Hierdurch wird der Strömungswiderstand des Stellers für die Schließstellung minimiert. Die Längsachse des Kühleranschlusses ist dabei durch seine Längsmittelachse bzw. durch seine Hauptdurchströmungsrichtung definiert.

Bei einer anderen vorteilhaften Weiterbildung kann das Ventilglied ein bidirektional linear verstellbarer Ventilteller sein. Mit anderen Worten, das Thermostatventil ist hier nach Art eines Tellerventils konzipiert, das sich ebenfalls durch eine hohe Funktionssicherheit sowie eine preiswerte Realisierbarkeit auszeichnet.

Gemäß einer Weiterbildung kann im Gehäuse am Bypassanschluss ein Ventilsitz ausgebildet sein, mit dem der Ventilteller in der Schließstellung zusammenwirkt. Hierdurch kann das Thermostatventil in der Schließstellung den Bypassanschluss effizient versperren. Das Zusammenwirken von Ventilteller und Ventilsitz bewirkt in der Schließstellung ein selbsttätiges Zentrieren des Ventiltellers im Ventilsitz, wodurch die angestrebte Sperrwirkung mit hoher Zuverlässigkeit erreicht werden kann. Ferner können Ventilteller und Ventilsitz Herstellungstoleranzen ausgleichen, wodurch eine preiswerte Herstellbarkeit möglich ist.

Besonders vorteilhaft ist dabei eine Konfiguration, bei welcher der Ventilsitz durch eine konische Innenkontur einer Gehäusewand gebildet ist, die koaxial an den Bypassanschluss anschließt. Hierdurch lässt sich der Ventilsitz besonders preiswert realisieren. Zweckmaäßig kann vorgesehen sein, dass die konische Innenkontur an einen Übergang zwischen Bypassanschluss und Kühleranschluss angrenzt. Diese Bauform ist sehr kompakt.

Zweckmäßig ist der Steller koaxial zum Bypassanschluss angeordnet. In der Folge ist auch der Ventilsitz zweckmäßig koaxial zum Bypassanschluss angeordnet. Die Axialrichtung des Bypassanschlusses ist dabei durch seine Längsmittelachse bzw. durch seine Hauptdurchströmungsrichtung definiert.

Gemäß einer vorteilhaften Ausführungsform kann der Steller ein Dehnstoffelement aufweisen, das temperaturabhängig eine Stellstange bidirektional linear antreibt. Ein derartiges Dehnstoffelement, das bspw. mit Wachs als Dehnstoff arbeitet, zeichnet sich durch eine hohe Funktionssicherheit sowie durch einen geringen Wartungsbedarf aus.

Gemäß einer Weiterbildung kann eine Rückstellfeder vorgesehen sein, welche die Stellstange in das Dehnstoffelement hinein antreibt. Während das Dehnstoffelement bei zunehmender Temperatur zuverlässig ein Ausfahren der Stellstange sicherstellt, gewährleistet die Rückstellfeder bei abnehmender Temperatur ein sicheres Einfahren der Stellstange. Die Stellstange bewegt sich dabei relativ zu einem Gehäuse des Dehnstoffelements, in dem der Dehnstoff untergebracht ist.

Bei einer anderen vorteilhaften Ausführungsform kann der Steller im Saugraum des Gehäuses über eine sternförmige Strebenanordnung am Gehäuse abgestützt sein. Auch diese Bauform zeichnet sich durch einen niedrigen Strömungswiderstand aus, so dass die Förderleistung der Kühlmittelpumpe durch die Integration des Thermostatventils nicht oder nur geringfügig beeinträchtigt wird. Besonders vorteilhaft kann das vorstehend genannte Dehnstoffelement im Saugraum über eine solche sternförmige Strebenanordnung am Gehäuse abgestützt sein. Die jeweilige Strebenanordnung ist im Saugraum von einer Saugseite des Laufrads axial beabstandet angeordnet.

Zweckmäßig kann vorgesehen sein, das Laufrad der Kühlmittelpumpe als Radialverdichterrad auszugestalten, das eine dem Saugraum ausgesetzte axiale Saugseite und eine dem Druckraum ausgesetzte radiale Druckseite aufweist. Der Druckraum ist dann zweckmäßig ringförmig oder spiralförmig ausgestaltet.

Ein erfindungsgemäßer Motorkühlkreis, der sich für eine Verwendung bei einer Brennkraftmaschine in einem Kraftfahrzeug, vorzugsweise in einem Personenkraftwagen, eignet, umfasst einen Kühler, einen den Kühler umgehenden Bypass sowie eine Kühlmittelpumpe der vorstehend beschriebenen Art. Eine Vorlaufleitung des Motorkühlkreises verbindet den Motoranschluss des Gehäuses mit einem Motorblock der Brennkraftmaschine. Eine Rücklaufleitung des Motorkühlkreises verbindet den Motorblock mit dem Kühleranschluss des Gehäuses. Ferner ist der Kühler in diese Rücklaufleitung eingebunden. Außerdem verbindet eine Bypassleitung des Motorkühlkreises unter Umgehung des Kühlers die Rücklaufleitung mit dem Bypassanschluss des Gehäuses.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Motorkühlkreises,
- Fig. 2: eine stark vereinfachte Schnittansicht einer Kühlmittelpumpe mit einem Thermostatventil in einer Offenstellung,
- Fig. 3: eine Ansicht wie in Fig. 2, jedoch mit dem Thermostatventil in einer Schließstellung,
- Fig. 4: eine Ansicht wie in Fig. 2, jedoch bei einer anderen Ausführungsform mit dem Thermostatventil in der Offenstellung,
- Fig. 5: eine Ansicht wie in Fig. 4, jedoch mit dem Thermostatventil in der Schließstellung.

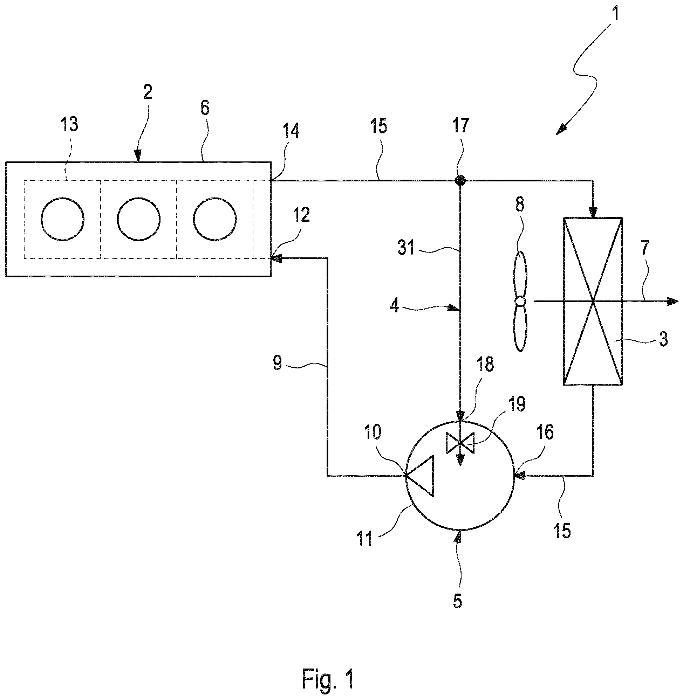

Entsprechend Fig. 1 umfasst ein Motorkühlkreis 1, der in einem Kraftfahrzeug zum Kühlen einer Brennkraftmaschine 2 dient, einen Kühler 3, einen Bypass 4 und eine Kühlmittelpumpe 5. Im Einbauzustand des Motorkühlkreises 1 ist in diesen außerdem ein Motorblock 6 der Brennkraftmaschine 2 eingebunden. Der Kühler 3 dient zum Kühlen des flüssigen Kühlmittels und steht hierzu wärmeübertragend mit einem Kühlluftstrom 7 in Verbindung. Dieser kann durch den so genannten Fahrtwind während des Betriebs des Fahrzeugs gebildet werden. Zusätzlich oder alternativ kann zur Erzeugung des Kühlluftstroms 7 ein Gebläse 8 vorgesehen sein. Der Bypass 4 umgeht innerhalb des Motorkühlkreises 1 den Kühler 3. Die Kühlmittelpumpe 5 dient zum Antreiben des Kühlmittels innerhalb des Motorkühlkreises 1. Der Motorkühlkreis 1 besitzt eine Vorlaufleitung 9, die einen Motoranschluss 10 eines Gehäuses 11 der Kühlmittelpumpe 5 mit einem Eintrittsanschluss 12 des Motorblocks 6 verbindet. Im Inneren des Motorblocks 6 ist der Eintrittsanschluss 12 über eine Kühlkanalstruktur 13 mit einem Austrittsanschluss 14 des Motorblocks 6 verbunden. Eine Rücklaufleitung 15 des Motorkühlkreises 1 verbindet den Austrittsanschluss 14 mit einem Kühleranschluss 16 des Gehäuses 11 der Kühlmittelpumpe 5. In der Rücklaufleitung 15 ist der Kühler 3 angeordnet. Zur Realisierung des Bypasses 4 weist der Motorkühlkreis 1 eine Bypassleitung 31 auf, die eine Abzweigstelle 17 der Rücklaufleitung 15 mit einem Bypassanschluss 18 des Gehäuses 11 der Kühlmittelpumpe 5 verbindet. Die Abzweigstelle 17 ist dabei stromauf des Kühlers 3 in der Rücklaufleitung 15 angeordnet.

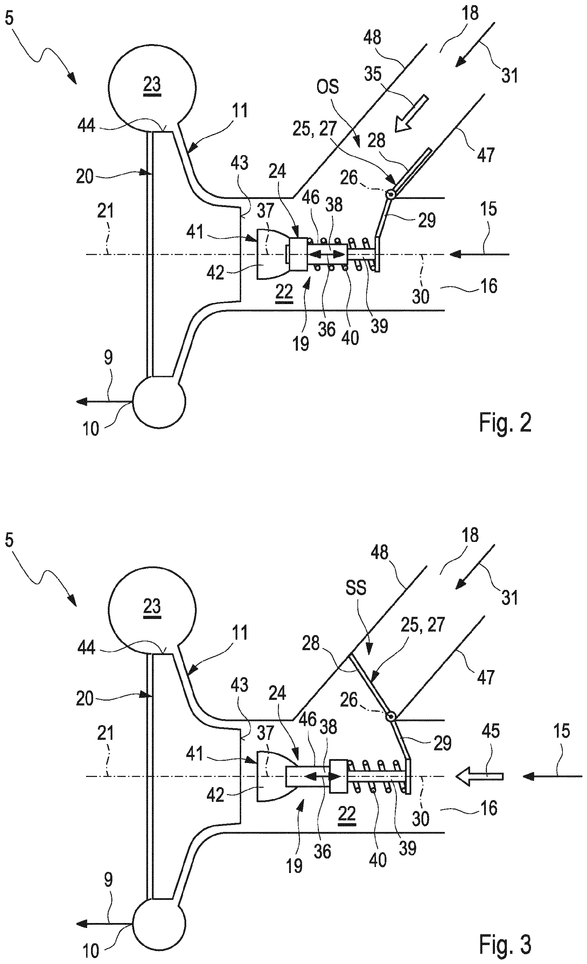

Zum Steuern des Bypasses 4 ist beim hier vorgestellten Motorkühlkreis 1 ein Thermostatventil 19 in die Kühlmittelpumpe 5 integriert und hierzu im Gehäuse 11 angeordnet. Nachfolgend wird mit Bezug auf die Fig. 2 bis 5 auf mögliche Beispiele für die Integration des Thermostatventils 19 in die Kühlmittelpumpe 5 näher eingegangen.

Entsprechend den Fig. 2 bis 5 ist im Gehäuse 11 der Kühlmittelpumpe 5 ein Laufrad 20 um eine Rotationsachse 21 drehbar angeordnet. Das Laufrad 20 ist dabei im Gehäuse 11 zwischen einem Saugraum 22 und einem Druckraum 23 angeordnet. Das Gehäuse 11 weist wie vorstehend genannt einen Motoranschluss 10, an den die Vorlaufleitung 9 anschließbar ist, einen Bypassanschluss 18, an den die Bypassleitung 31 anschließbar ist, und einen Kühleranschluss 16 auf, an den die Rücklaufleitung 15 anschließbar ist. Der Motoranschluss 10 ist mit dem Druckraum 23 fluidisch verbunden. Der Bypassanschluss 18 und der Kühleranschluss 16 sind mit dem Saugraum 22 fluidisch verbunden.

Bei den gezeigten Beispielen handelt es sich beim Laufrad 20 um ein Radialverdichterrad, das eine dem Saugraum 22 ausgesetzte axiale Saugseite 43 und eine radiale Druckseite 44 besitzt, die dem Druckraum 23 ausgesetzt ist und die ringförmig oder spiralförmig ausgestaltet sein kann.

Im Betrieb der Kühlmittelpumpe 5 rotiert das Laufrad 20 um die Rotationsachse 21. Dadurch fördert das Laufrad 20 Kühlmittel von seiner Saugseite 23 zur Druckseite 44, wodurch sich im Saugraum 22 ein Unterdruck einstellt, während sich im Druckraum 23 ein Überdruck einstellt.

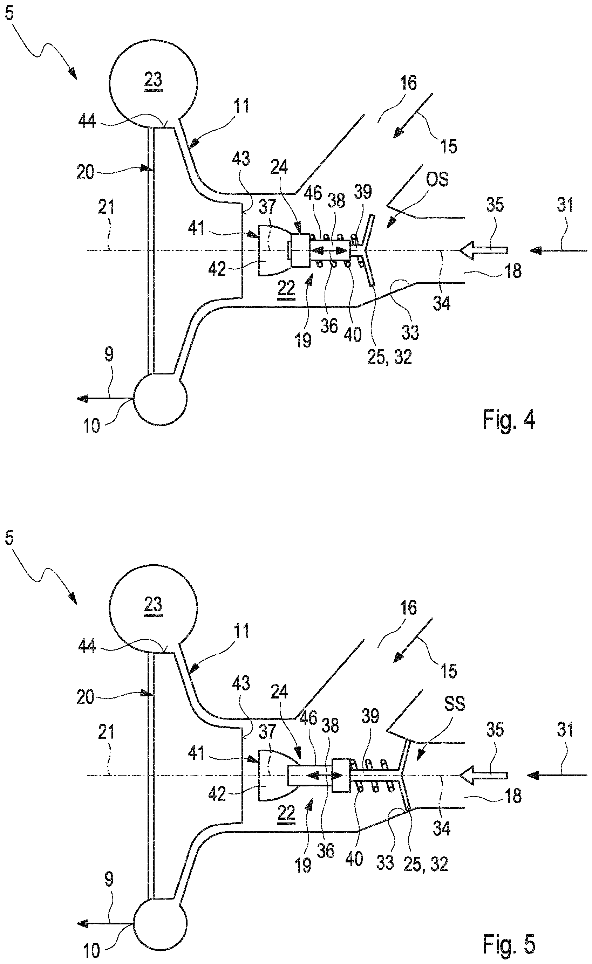

Ferner ist im Gehäuse 11 wie genannt das Thermostatventil 19 angeordnet, mit dessen Hilfe der Bypassanschluss 18 temperaturabhängig gesteuert ist. Das Thermostatventil 19 umfasst einen Steller 24 und ein Ventilglied 25. Der Steller 24 arbeitet temperaturabhängig. Das Ventilglied 25 ist mit Hilfe des Stellers 24 zwischen einer in den Fig. 2 und 4 gezeigten Offenstellung OS und einer in den Fig. 3 und 5 gezeigten Schließstellung SS verstellbar. In der Offenstellung OS gibt das Ventilglied 25 den Bypassanschluss 18 frei. In der Schließstellung SS bewirkt das Ventilglied 25 dagegen ein Sperren oder Verschließen des Bypassanschlusses 18.

Bei der in den Fig. 2 und 3 gezeigten Ausführungsform ist das Ventilglied 25 eine Klappe 27, die um eine Schwenkachse 26 verstellbar gelagert ist. Die Klappe 27 besitzt einen Klappenkörper 28, der zum Steuern des Bypassanschlusses 18 mit diesem zusammenwirkt. Ferner besitzt die Klappe 27 einen Stellarm 29, der bezüglich der Schwenkachse 26 drehfest mit dem Klappenkörper 28 verbunden ist. Dabei erstreckt sich die Schwenkachse 26 zwischen Klappenkörper 28 und Stellarm 29 durch das Ventilglied 25 bzw. durch die Klappe 27 hindurch. Die Schwenkachse 26 befindet sich relativ nahe an einer Wand 47 des Gehäuses 11 bzw. des Bypassanschlusses 18.

Der Steller 24 ist bei der in den Fig. 2 und 3 gezeigten Ausführungsform koaxial zum Kühleranschluss 16 angeordnet. Eine Längsmittelachse des Kühleranschlusses 16 ist dabei mit 30 angedeutet und fällt mit der Rotationsachse 21 zusammen.

Bei der in den Fig. 4 und 5 gezeigten Ausführungsform ist das Ventilglied 25 durch einen bidirektional linear verstellbaren Ventilteller 32 gebildet, der in der Schließstellung SS mit einem Ventilsitz 33 zusammenwirkt, der hierzu am Bypassanschluss 18 im Gehäuse 11 ausgebildet ist. Der Ventilsitz 33 ist dabei bezüglich einer Längsmittelachse 34 des Bypassanschlusses 18 konisch ausgestaltet, derart, dass er sich entgegen der Strömungsrichtung der Bypassströmung verjüngt. Die Bypassströmung ist dabei in den Fig. 2 und 4 jeweils durch einen Pfeil 35 angedeutet. Im Beispiel der Fig. 4 und 5 ist der Steller 24 koaxial zum Bypassanschluss 18 angeordnet. Die Längsmittelachse 34 des Bypassanschlusses 18 fällt hier mit der Rotationsachse 21 zusammen.

Der Steller 24 ist in beiden hier gezeigten Beispielen als bidirektionaler, linearer Steller 24 konzipiert. Seine Bewegungsrichtung ist in den Fig. 2 bis 5 jeweils durch einen Doppelpfeil angedeutet und mit 36 bezeichnet. Die Bewegungsrichtung 36 ist dabei parallel zur Rotationsachse 21 ausgerichtet. Ferner ist der Steller 24 zweckmäßig koaxial zum Laufrad 20 im Gehäuse 11 angeordnet, so dass eine Längsmittelachse 37 des Stellers 24 mit der Rotationsachse 21 zusammenfällt. Der Steller 24 umfasst ein Dehnstoffelement 38, das in einem Gehäuse 46 einen Dehnstoff, z.B. Wachs enthält, der sich temperaturabhängig ausdehnt bzw. zusammenzieht. Das Dehnstoffelement 38 besitzt eine Stellstange 39, die im Gehäuse 46 auf geeignete Weise, z.B. in Verbindung mit einem Plunger oder einem Kolben, mit dem Dehnstoff gekoppelt ist, so dass die Stellstange 39 abhängig von der Temperatur aus dem Gehäuse 46 des Dehnstoffelements 38 ausfährt bzw. darin einfährt. Das Dehnstoffelement 38 treibt somit die Stellstange 39 bidirektional und linear an.

Der Steller 24 ist hier außerdem mit einer Rückstellfeder 40 ausgestattet, die dazu dient, die Stellstange 39 in das Gehäuse 46 des Dehnstoffelements 38 hinein anzutreiben.

Zweckmäßig ist der Steller 24 im Saugraum 22 über eine Strebenanordnung 41 am Gehäuse 11 der Kühlmittelpumpe 5 abgestützt. Die Strebenanordnung 41 besitzt mehrere, sternförmig angeordnete Streben 42, die in der Umfangsrichtung, insbesondere gleichförmig, verteilt angeordnet sind. Beispielsweise umfasst die Strebenanordnung 41 drei Streben 42, die jeweils um etwa 120° voneinander beabstandet angeordnet sind. In den Schnittansicht der Fig. 2 bis 5 ist jeweils nur eine solche Strebe 42 erkennbar.

Die hier vorgestellte Kühlmittelpumpe 5 arbeitet wie folgt:
Bei niedrigen Temperaturen im flüssigen Kühlmittel des Motorkühlkreises 1 ist das Thermostatventil 19 in seine Offenstellung OS verstellt. In Fig. 2 ist somit die Klappe 27 in die Offenstellung OS verstellt und liegt z.B. an besagter Wand 47 an, an der sich die Schwenkachse 26 befindet. In Fig. 4 ist der Ventilteller 32 vom Ventilsitz 33 abgehoben. In der Folge ist der Bypass 4 bzw. die Bypassleitung 31 geöffnet, so dass der Bypassstrom 35 in den Saugraum 22 einströmen kann. Aufgrund des deutlich höheren Strömungswiderstands für das Kühlmittel durch den Kühler 3 stellt sich dabei im Wesentlichen kaum eine vom Kühler 3 kommende Strömung von Kühlmittel ein. Niedrige Temperaturen liegen bspw. bei Umgebungstemperatur vor.

Mit zunehmender Laufzeit der Brennkraftmaschine 2 erhöht sich die Temperatur des Kühlmittels, wodurch sich auch die Temperatur am bzw. im Thermostatventil 19 erhöht. Ab einer vorbestimmten Temperatur beginnt das Thermostatventil 19 sukzessive bzw. kontinuierlich damit, den Bypassanschluss 18 zu verschließen. Mit anderen Worten, das Thermostatventil 19 wird temperaturabhängig in die Schließstellung SS verstellt. Die Schließstellung SS soll insbesondere dann vorliegen, wenn die Brennkraftmaschine 2 ihre vorgesehene Betriebstemperatur erreicht hat. In der Schließstellung SS hat der Steller 24 das Stellglied 25 in die Schließstellung SS verstellt. Gemäß Fig. 3 liegt die Klappe 27 an einer der Schwenkachse 26 gegenüberliegenden Wand 48 des Gehäuses 11 an. An dieser Wand 48 kann hierzu eine entsprechende Kontur ausgeformt sein, die ein möglichst dichtes Anliegen des Klappenkörpers 28 ermöglicht. Gemäß Fig. 5 ist der Ventilteller 32 mit dem Ventilsitz 33 in Kontakt. In der Folge strömt das Kühlmittel nunmehr ausschließlich vom Kühler 3 kommend in die Saugseite 22 des Gehäuses 11. Ein entsprechender Kühlerstrom ist in den Fig. 3 und 5 durch einen Pfeil 45 angedeutet.

## Patentansprüche

1. Kühlmittelpumpe für einen Motorkühlkreis (1) eines Kraftfahrzeugs,
- mit einem Gehäuse (11), in dem ein Laufrad (20) drehbar angeordnet ist, das im Gehäuse (11) zwischen einem Saugraum (22) und einem Druckraum (23) angeordnet ist,
- mit einem am Gehäuse (11) ausgebildeten Motoranschluss (10), der mit dem Druckraum (23) fluidisch verbunden ist,
- mit einem am Gehäuse (11) ausgebildeten Bypassanschluss (18), der mit dem Saugraum (22) fluidisch verbunden ist,
- mit einem am Gehäuse (11) ausgebildeten Kühleranschluss (16), der mit dem Saugraum (22) fluidisch verbunden ist,
- mit einem im Gehäuse (11) im Saugraum (22) angeordneten Thermostatventil (19) zum temperaturabhängigen Steuern des Bypassanschlusses (18),
- wobei das Thermostatventil (19) einen temperaturabhängig arbeitenden Steller (24) und ein mit dem Steller (24) zwischen einer Offenstellung (OS) zum Freigeben des Bypassanschlusses (18) und einer Schließstellung (SS) zum Sperren des Bypassanschlusses (18) verstellbares Ventilglied (25) aufweist,
- wobei der Steller (24) als bidirektionaler, linearer Steller (24) ausgestaltet ist,
- wobei das Thermostatventil (19) bei niedrigen Temperaturen in seine Offenstellung (OS) verstellt ist, während es bei hohen Temperaturen in seine Schließstellung (SS) verstellt ist,
- wobei der Steller (24) koaxial zum Kühleranschluss (16) angeordnet ist, so dass eine Längsmittelachse (37) des Stellers (24) mit der Rotationsachse (21) des Laufrads (20) zusammenfällt,
- wobei das Ventilglied (25) ein bidirektional, linear verstellbarer Ventilteller (32) ist,
**dadurch gekennzeichnet,**
- **dass** im Gehäuse (11) am Bypassanschluss (18) ein Ventilsitz (33) ausgebildet ist, mit dem der Ventilteller (32) in der Schließstellung (SS) zusammenwirkt,
- **dass** der Ventilsitz (33) durch eine konische Innenkontur einer Gehäusewand gebildet ist, die koaxial an den Bypassanschluss (18) anschließt,
- **dass** die konische Innenkontur an einen Übergang zwischen Bypassanschluss (18) und Kühleranschluss (16) angrenzt.

2. Kühlmittelpumpe nach Anspruch 1,
**dadurch gekennzeichnet,**
**dass** der Steller (24) koaxial zum Bypassanschluss (18) angeordnet ist.

3. Kühlmittelpumpe nach einem der vorhergehenden Ansprüche,
**dadurch gekennzeichnet,**
**dass** der Steller (24) ein Dehnstoffelement (38) aufweist, das temperaturabhängig eine mit dem Ventilglied (25) gekoppelte Stellstange (39) bidirektional linear antreibt.

4. Kühlmittelpumpe nach Anspruch 3,
**dadurch gekennzeichnet,**
**dass** eine Rückstellfeder (40) vorgesehen ist, welche die Stellstange (39) in das Dehnstoffelement (38) hinein antreibt.

5. Kühlmittelpumpe nach einem der vorhergehenden Ansprüche,
**dadurch gekennzeichnet,**
**dass** der Steller (24) im Saugraum (22) über eine sternförmige Strebenanordnung (41) am Gehäuse (11) abgestützt ist.

6. Kühlmittelpumpe nach Anspruch 3 oder 4,
**dadurch gekennzeichnet,**
**dass** das Dehnstoffelement (38) im Saugraum (22) über eine sternförmige Strebenanordnung (41) am Gehäuse (11) abgestützt ist.

7. Kühlmittelpumpe nach einem der vorhergehenden Ansprüche,
**dadurch gekennzeichnet,**
**dass** das Laufrad (20) als Radialverdichterrad ausgestaltet ist, das eine dem Saugraum (22) ausgesetzte axiale Saugseite (43) und eine dem ringförmig oder spiralförmig ausgestalteten Druckraum (23) ausgesetzte radiale Druckseite (44) aufweist.

8. Motorkühlkreis für eine Brennkraftmaschine in einem Kraftfahrzeug, vorzugsweise in einem Personenkraftwagen,
- mit einem Kühler (3),
- mit einem den Kühler (3) umgehenden Bypass (4),
- mit einer Kühlmittelpumpe (5) nach einem der vorhergehenden Ansprüche,
- mit einer Vorlaufleitung (9) zum Anschließen des Motoranschlusses (10) an einen Motorblock (6) der Brennkraftmaschine (2),
- mit einer Rücklaufleitung (15) zum Anschließen des Motorblocks (6) an den Kühleranschluss (16), in die der Kühler (3) eingebunden ist,
- mit einer Bypassleitung (31), die an den Bypassanschluss (18) und stromauf des Kühlers (3) an die Rücklaufleitung (15) angeschlossen ist.
